# EUROPÄISCHE PATENTSCHRIFT

(11) **EP 1 899 143 B1**
(45) Veröffentlichungstag und Bekanntmachung des Hinweises auf die Patenterteilung: **21.01.2009**
(21) Anmeldenummer: 06763486.5
(22) Anmeldetag: 02.06.2006
(51) Int. Cl.: B29C 65/16, B60T 8/36

(54) **GERÄT UND VERFAHREN ZUM HERSTELLEN EINES GERÄTS**
DEVICE AND METHOD FOR PRODUCING A DEVICE
APPAREIL ET PROCEDE POUR PRODUIRE UN APPAREIL

(30) Priorität: 07.06.2005 DE 102005026205
(43) Veröffentlichungstag der Anmeldung: 19.03.2008
(73) Patentinhaber: Continental Automotive GmbH, 30165 Hannover (DE)
(72) Erfinder: BERMEL, Andreas, 60439 Frankfurt Am Main (DE); KROHN, Thomas, 65824 Schwalbach (DE); NEUMANN-HENNEBERG, Uwe, 65779 Kelkheim (DE)
(86) Internationale Anmeldenummer: PCT/EP2006/062865
(87) Internationale Veröffentlichungsnummer: WO 2006/131499

(56) Entgegenhaltungen:
- EP-A- 1 486 314
- "Laserstrahlschweissen von Thermoplasten im Durchstrahlverfahren" TECHNISCHE INFORMATION FUER EXPERTEN, 1. Februar 2000 (2000-02-01), Seiten 1-8, XP002312668 in der Anmeldung erwähnt

## Beschreibung

Die Erfindung betrifft ein Gerät und ein Verfahren zum Herstellen eines Geräts mit einem Gehäuse und mit einem Rahmenelement, das innerhalb des Gehäuses angeordnet ist und das mindestens ein Bauelement aufnimmt. Ein derartiges Gerät kann beispielsweise eine Steuervorrichtung für eine Brennkraftmaschine oder auch eine Steuervorrichtung für eine elektrisch stellbare Bremse eines Fahrzeugs sein, die einen elektromotorischen Stellantrieb nutzt, um eine Bremskraft zu erzeugen, die den jeweiligen Bremsen an Rädern eines Fahrzeugs zugeführt wird.

Aufgrund des häufig nur geringen zur Verfügung stehenden Bauraums für das Gerät, ist es eine Herausforderung, das Gerät möglichst kompakt auszubilden.

### Unter

http://www.basf.de/basf/img/dienstl/bauteil/images/laserstrah lschweissen.pdf ist eine technische Information zum Laserstrahlschweißen von Thermoplasten im Durchstrahlverfahren elektronisch abrufbar. Aus dem Dokument ist es bekannt, dass der Fügeprozess beim Laserstrahlschweißen auf der Umwandlung von Strahlungsenergie in Wärme durch Absorption in dem entsprechenden Material führt und dadurch eine lokal begrenzte Schmelze in der Fügezone gebildet wird. Eine kurzwellige Infrarotstrahlung soll das obere transmittierende Fügeteil möglichst ungehindert durchdringen und in einem unteren Fügeteil in einer Tiefe von 0,1 bis 0,5 mm vollständig absorbiert und in Wärme umgewandelt werden. Durch den Energieeintrag wird das untere Fügeteil im Bereich der Absorption erwärmt und aufgeschmolzen. Die Schmelzbildung bewirkt einen Wärmeübertrag zwischen den beiden Fügeteilen und so wird auch das für die Laserstrahlung durchlässige Fügeteil aufgeschmolzen. Die Intensität der Absorption wird sowohl von dem gewählten Werkstoff und seinen Zusätzen als auch von der Wellenlänge der Strahlungsquelle bestimmt.

Die Aufgabe der Erfindung ist es gemäß eines ersten Aspekts, ein Verfahren zum Herstellen eines Geräts zu schaffen, mittels dessen einfach ein kompaktes Gerät hergestellt werden kann. Die Aufgabe der Erfindung ist es gemäß eines zweiten Aspekts, ein Gerät zu schaffen, das kompakt ist.

Die Erfindung zeichnet sich gemäß eines ersten Aspekts aus durch ein Verfahren zum Herstellen eines Geräts mit einem Gehäuse und einem Rahmenelement, das innerhalb des Gehäuses angeordnet ist, das mindestens ein Bauelement, insbesondere ein elektrisches oder elektronische Bauelement, aufnimmt und das mindestens einen Biegearm aufweist. Der Biegearm wird so ausgebildet, dass ein Kontaktbereich des Biegearms in einem, insbesondere frei, montierten Zustand innerhalb des Gehäuses an einem Kontaktbereich einer Wandung des Gehäuses mit Vorspannung anliegt. Der Biegearm ist dazu bevorzugt elastisch biegbar und so ausgebildet, dass er in dem frei montierten Zustand innerhalb des Gehäuses elastisch ausgelenkt wird durch eine Wandung des Gehäuses und somit dieser mit Vorspannung anliegt.

Der Biegearm wird mittels Durchstrahllaserschweißens stoffschlüssig mit dem Gehäuse verbunden und wird durch Beaufschlagen des Geräts mit einem Laserstrahl vorgegebener Wellenlänge derart, dass der Laserstrahl durch das Gehäuse hin zu dem Kontaktbereich des Biegearms transmittiert wird. Das Gehäuse wird zumindest in einem Bereich, durch den der Laserstrahl transmittiert wird, aus einem Material hergestellt, das transparent ist für die vorgegebene Wellenlänge des Laserstrahls. Der Kontaktbereich des Biegearms wird aus einem Material hergestellt, das absorbierend ist für die vorgegebene Wellenlänge des Laserstrahls. Das Verfahren zeichnet sich dadurch aus, dass das Gerät besonders kompakt ausgebildet werden kann und gleichzeitig auch ein zuverlässiges Fixieren des Rahmenelements einfach möglich ist, auch wenn es vollständig von dem Gehäuse umschlossen ist. Durch das Anliegen des Kontaktbereichs des Biegearms an der Wandung des Gehäuses mit Vorspannung kann überraschend einfach eine zuverlässige und hochwertige Schweißverbindung gewährleistet werden.

Gemäß einer vorteilhaften Ausgestaltung des Verfahrens wird der Biegearm so elastisch ausgebildet, dass er mit einer vorgegebenen Vorspannung in dem montierten Zustand an dem Kontaktbereich des Gehäuses anliegt und andererseits steif genug ist, um Schwingungen zu kompensieren, denen das Rahmenelement ausgesetzt ist. So kann zum einen einfach eine sehr hochwertige und zuverlässige Schweißverbindung sichergestellt werden bei einer gleichzeitig geringen Wahrscheinlichkeit einer mechanischen Beschädigung des Rahmenelements während des Betriebs, insbesondere bei einem Einsatz in einem Kraftfahrzeug, bei dem das Gerät hohen Schwingungsbelastungen ausgesetzt sein kann.

Gemäß einer weiteren vorteilhaften Ausgestaltung des Verfahrens wird an dem Kontaktbereich des Biegearms eine Nase ausgebildet. Auf diese Weise kann sowohl die Vorspannung einfach geeignet eingestellt werden, es kann eine günstige Massenverteilung des beim Durchstrahlschweißen zu schmelzenden Materials einfach erreicht werden und ein im Vergleich zum Nicht-vorhandensein der Nase größerer Bereich zum Schweißen genutzt werden. Dies hat den Vorteil, eine definierte Kontaktkontur ausgebildet ist auch bei unterschiedlicher Biegung des Biegearms. So ist beispielsweise bei einer Teilkugelförmigen Ausbildung der Nase die Kontaktkontur lediglich abhängig von dem Radius der Teilkugel.

Gemäß einer weiteren vorteilhaften Ausgestaltung des Verfahrens wird ein Schirmkörper an dem Biegearm ausgebildet, der abgewandt ist von dem Kontaktbereich des Gehäuses in Bezug auf den Kontaktbereich des Biegearms und der in der Flucht des Kontaktbereichs des Gehäuses sich über den Kontaktbereich des Biegearms hinaus erstreckt. Auf diese Weise kann bei einer Fehlpositionierung des Laserstrahls die Wahrscheinlichkeit einer Beschädigung des mindestens einen Bauelements signifikant verringert werden. Auf diese Weise kann beim Herstellen eine geringere Ausfallrate gewährleistet werden, insbesondere falls das Rahmenelement mehrere Biegearme aufweist und so auch bei einem inkorrekten Fixieren eines einzelnen Biegearms die Zuverlässigkeit des Geräts einfach gewährleistet werden.

Gemäß einer weiteren vorteilhaften Ausgestaltung des Verfahrens erfolgt das Durchstrahllaserschweißen in Form des Simultan-Durchstrahllaserschweißens.

Gemäß eines zweiten Aspekts zeichnet sich die Erfindung aus durch ein Gerät mit einem Gehäuse und einem Rahmenelement, das innerhalb des Gehäuses angeordnet ist, das mindestens ein Bauelement aufnimmt und das mindestens einen Biegearm aufweist, wobei der Biegearm so ausgebildet ist, dass ein Kontaktbereich des Biegearms in einem montierten Zustand innerhalb des Gehäuses an einem Kontaktbereich einer Wandung des Gehäuses mit Vorspannung anliegt. Der mindestens eine Biegearm ist mittels Durchstrahllaserschweißens stoffschlüssig mit dem Gehäuse verbunden. Das Gehäuse ist zumindest in einem Bereich, durch den zum Durchstrahlschweißen ein Laserstrahl transmittiert wird, aus einem Material hergestellt, das transparent ist für die vorgegebene Wellenlänge des Laserstrahls. Ein Kontaktbereich des Biegearms, in dem der Biegearm mit dem Gehäuse verschweißt ist, ist aus einem Material hergestellt, das absorbierend ist für die vorgegebene Wellenlänge des Laserstrahls. Das Gehäuse und seine vorteilhaften Ausgestaltungen korrespondieren zu dem Verfahren zum Herstellen des Gehäuses. Das Gleiche gilt für die Vorteile.

Ausführungsbeispiele der Erfindung sind im Folgenden anhand der schematischen Zeichnungen erläutert. Es zeigen:
- Figur 1: ein Gerät,
- Figur 2: einen Querschnitt durch das Gerät gemäß Figur 1 längs einer Linie II, II',
- Figur 3: eine dreidimensionale teilweise Schnittdarstellung eines Teils des Geräts gemäß der Figur 1 und
- Figur 4: ein Ablaufdiagramm des Ablaufs beim Herstellen des Geräts.

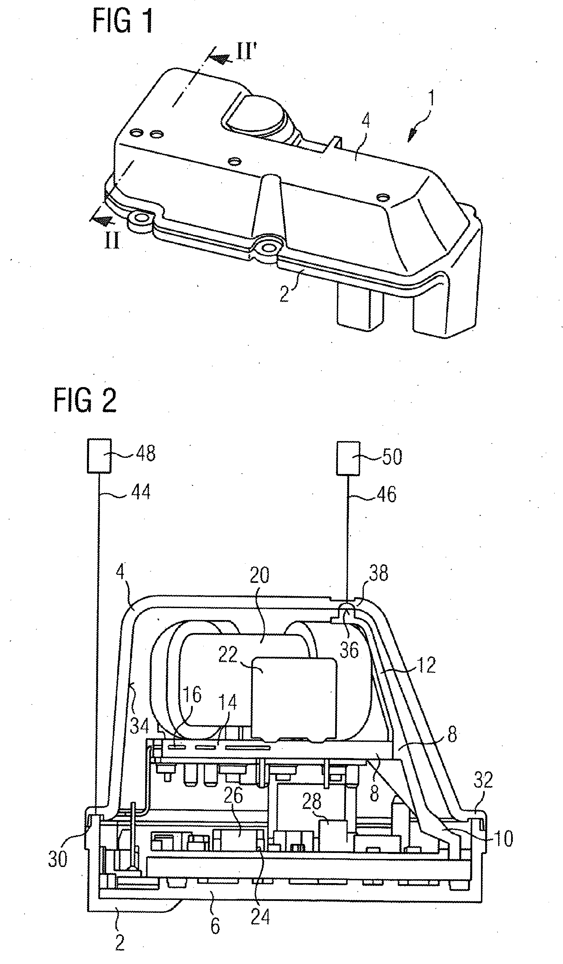

Ein Gerät (Figur 1) umfasst ein Gehäuse 1, das ein Grundteil 2 und einen Deckel 4 umfasst. Der Deckel 4 und das Grundteil 2 sind bevorzugt aus einem Kunststoff hergestellt, so z. B. aus einem thermoplastischen Kunststoff, wie PBT GF30. In dem Gehäuse ist eine Platte 6 aufgenommen, die bevorzugt aus Aluminium besteht. Die Platte 6 liegt auf dem Grundteil 2 auf.

Ferner ist ein Rahmenelement 8 in das Gehäuse eingebracht, das einen Stützfuß 10, mindestens einen Biegearm 12 und einen Aufnahmebereich 14 umfasst. Das Rahmenelement 8 umfasst als Material bevorzugt auch Kunststoff, insbesondere einen thermoplastischen Kunststoff, so z. B. PBT GF30. Das Rahmenelement 8 hat in dieser Ausführungsform mehrere Stützfüße 10, mit denen es auf der Platte 6 abgestützt ist. Es ist bevorzugt auf die Platte 6 mit den Stützfüßen 10 aufgesetzt.

Der Aufnahmebereich 14 ist ausgebildet zur Aufnahme von Bauelementen, wie einer Drosselspule 20 und einem Kondensator 22. In dem Aufnahmebereich 14 kann auch ein Stanzgitter 16 eingebracht sein zum elektrischen Kontaktieren der Bauelemente, die sich auf dem Aufnahmebereich befinden.

Der Biegearm 12 ist so ausgebildet, dass er beim Aufsetzen des Deckels 4 elastisch von diesem verbogen wird und so an einer inneren Wandung 34 des Deckels dann in einem Kontaktbereich 36 des Biegearms mit einem Kontaktbereich 38 des Deckels 4 unter Vorspannung in Kontakt ist, und zwar dann, wenn der Deckel 4 mit einem Anlagebereich 32 des Deckels 4 in Anlage an einem Anlagebereich 30 des Grundteils 2 ist. Das Material des Biegearms 12 und seine Geometrie sind entsprechend gewählt, um ein elastisches Verbiegen des Biegearms zum einen zu gewährleisten und zum anderen sicherzustellen, dass er eine ausreichende mechanische Stabilität hat, um in einem fertig hergestellten Zustand des Geräts stoffschlüssig mit dem Deckel 4 verbundenen Zustand mechanischen Belastungen des Rahmenelements 8 stand zu halten, hervorgerufen durch Beschleunigungskräfte, die auf das Gerät einwirken und abhängen von den Massen der auf dem Rahmenelement 8 in seinem Aufnahmebereich 14 befestigten Bauelementen.

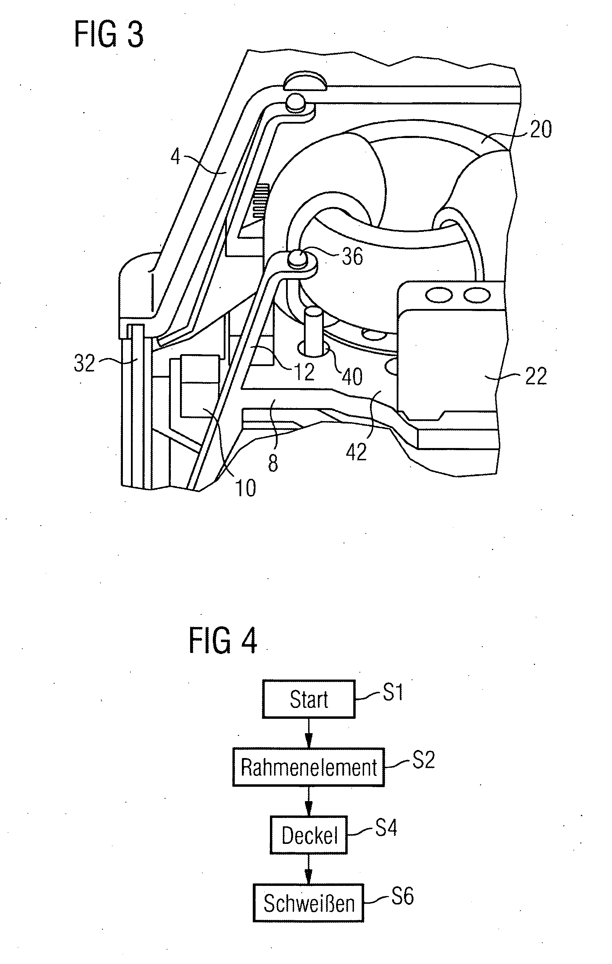

Bevorzugt sind mehrere Biegearme in dem Rahmenelement 8 ausgebildet, so z. B. zwei oder beliebig mehrere Biegearme 12. In dem Schnitt gemäß der Figur 3 sind beispielsweise zwei Biegearme 12 dargestellt.

Ferner ist in dem Gehäuse auch noch eine Leiterplatte 24 angeordnet, die beispielsweise auch als Flexfolie ausgebildet ist und auf der weitere Bauelemente 26, 28 aufgenommen sind, die beispielsweise elektrische oder elektronische Bauelemente oder auch integrierte Schaltkreise oder dergleichen sein können.

Der Biegearm 12 hat eine Nase 40, die an dem Kontaktbereich 36 des Biegearms ausgebildet ist. Ferner hat er einen Schirmkörper 42, der abgewandt ist von dem Kontaktbereich 38 des Deckels in Bezug auf den Kontaktbereich 36 des Biegearms 12 und der in der Flucht des Kontaktbereichs 38 des Deckels 4 sich über den Kontaktbereich 36 des Biegearms 12 hinaus erstreckt.

Im Folgenden wird das Vorgehen beim Herstellen anhand des Ablaufdiagramms der Figur 4 näher erläutert. Ein Programm wird in einem Schritt S1 gestartet.

In einem Schritt S2 wird das Rahmenelement 12 hergestellt. Dazu wird das Stanzgitter 16 zumindest teilweise in den Aufnahmebereich 14 des Rahmenelements eingebracht. Dies kann beispielsweise erfolgen durch Kunststoffspritzen des Rahmenelements. Das Rahmenelement wird bevorzugt aus einem Kunststoff hergestellt, der zumindest in dem Kontaktbereich 36 des Biegearms aus einem Material ausgebildet ist, das Laserstrahlung einer vorgegebenen Wellenlänge absorbiert. Das Material ist dabei so ausgewählt, dass es nachfolgend im Rahmen eines Durchstrahllaserschweißschrittes stoffschlüssig mit einem ebenfalls geeignet gewählten Material des Deckels 4 in dem Kontaktbereich 38 des Deckels stoffschlüssig verbunden werden kann. Geeignete Materialien für diesen Zweck sind beispielsweise aus der Internetveröffentlichung der BASF AG "Laserstrahlschweißen von Thermoplasten im Durchstrahlverfahren, Technische Information für Experten 02/00", die bereits eingangs zitiert wurde, bekannt.

Ferner werden in dem Schritt S2 die Bauelemente auf dem Aufnahmebereich 14 angeordnet und gegebenenfalls elektrisch kontaktiert, so z. B. mit dem Stanzgitter 16. Anschließend wird das Rahmenelement 8 in das Gehäuse 1 eingesetzt und zwar so, dass es sich mit dem Stützfuß 10 auf der Platte 6 abstützt. Dies erfolgt bei noch nicht aufgesetztem Deckel 4. Die Platte 6 kann, muss jedoch nicht notwendigerweise vorhanden sein.

In einem Schritt S4 wird dann anschließend der Deckel 4 auf das Grundteil 2 so aufgesetzt, dass der Anlagebereich 30 des Grundteils 2 in Kontakt ist mit dem Anlagebereich 32 des Deckels 4. In diesem Zustand ist dann der Biegearm 12 elastisch verbogen und kontaktiert mit seinem Kontaktbereich 36 den Kontaktbereich 38 des Deckels 4, wobei dies unter einer vorgegebenen Vorspannung erfolgt.

In einem Schritt S6 wird der Deckel 4 mittels einer nicht dargestellten Pressvorrichtung, die bevorzugt in Form einer Maske ausgebildet ist, in seiner Anlage mit dem Anlagebereich 30 des Grundteils 2 gehalten und erste und zweite Laserstrahlen 44, 46 werden fluchtend zu den Anlagebereichen 30, 32 bzw. den Kontaktbereichen 36, 38 von außen auf den Deckel 4 zum Einwirken gebracht. In diesem Schritt erfolgt somit das Durchstrahllaserschweißen, das im Folgenden näher erläutert ist.

Der Fügeprozess beim Laserstrahlschweißen beruht auf der Umwandlung von Strahlungsenergie in Wärme durch Absorption des Materials in dem Anlagebereich 30 des Grundteils 2 bzw. dem Kontaktbereich 36 des Biegearms 12, das entsprechend der Wellenlänge des ersten bzw. zweiten Laserstrahls 44, 46 geeignet ausgewählt ist. Darüber hinaus ist auch das korrespondierende Material des Deckels 4 in dem Anlagebereich 32 und dem Kontaktbereich 38 des Deckels 4 entsprechend abgestimmt, zum einen auf die Wellenlänge des jeweiligen Laserstrahls 44, 46 und auch auf das korrespondierende Material, mit dem ein Fügen erfolgen soll. Entsprechende Materialkombinationen sind ebenfalls in der oben genannten Veröffentlichung zum Laserstrahlschweißen offenbart, deren Inhalt hiermit diesbezüglich einbezogen ist.

Bevorzugt sind erste und zweite Laserquellen 48, 50 zum Erzeugen der jeweiligen Laserstrahlen 44, 46 vorgesehen. Bevorzugt handelt es sich bei der Laserstrahlung um kurzwellige Infrarotstrahlung. Der jeweilige Laserstrahl 44, 46 durchdringt den Deckel 4, der transparent ist für die jeweilige Wellenlänge des Laserstrahls 44, 46 und wird anschließend in dem Anlagebereich 30 des Grundteils 2 bzw. dem Kontaktbereich 36 des Biegearms 12 absorbiert und so in Wärme umgewandelt. Dies führt zu einem lokalen Aufschmelzen des Materials in dem Anlagebereich 30 des Grundteils 2 und dem Kontaktbereich 36 des Biegearms 12. Durch den Kontakt zwischen den Anlagenbereichen 30, 32 bzw. den Kontaktbereichen 36, 38 erfolgt eine Wärmeübertragung auch hin zu dem Deckel 4 und führt somit auch dort zu einem lokalen Aufschmelzen des Materials. Dies führt dann letztlich zu einer stoffschlüssigen Verbindung zwischen dem Deckel 4 und dem Grundteil 2 bzw. zwischen dem Deckel 4 und dem Biegearm 12.

Bevorzugt erfolgt das Schweißen in dem Schritt S6 in Form des Simultanschweißens, bei dem die Laserstrahlen mit hoher Geschwindigkeit über den gesamten zu verschweißenden Bereich umlaufend ausgelenkt werden. Bevorzugt wird das Grundteil 2 mit dem Deckel 4 umlaufend um das Grundteil bzw. den Deckel 2, 4 verschweißt. Darüber hinaus werden dann auch die gegebenenfalls mehreren vorhandenen Biegearme simultan mit dem Deckel verschweißt. Dies hat den Vorteil, dass ein sehr homogenes Einsinken des Deckels 4 hinunter zu dem Grundteil 2 erfolgen kann. Alternativ können jedoch auch der Deckel 4 und das Grundteil 2 gegenüber dem Deckel 4 und dem Biegearm 12 zeitlich versetzt verschweißt werden. Das Schweißen muss auch nicht notwendigerweise im Rahmen des Simultanschweißens erfolgen.

Durch das Vorsehen des Schirmkörpers 42 kann einfach auch bei einer gegebenenfalls etwas ungenauen Positionierung des Laserstrahls 46 verhindert werden, dass durch diesen Bauteile innerhalb des Gehäuses 1 beschädigt werden.

Der innerhalb des Gehäuses 1 zur Verfügung stehende Bauraum kann so sehr vollständig durch die Bauelemente ausgefüllt werden und es müssen keine Freiräume für ein gegebenenfalls ansonsten erfolgendes mechanisches Befestigen des Rahmenelements 8 an dem Gehäuse mittels Befestigungsmitteln, wie einer Schraube, vorgesehen werden. Dies kann auch zu einem Gesichtspunkt der Zugänglichkeit für entsprechende Werkzeuge zum Befestigen der Befestigungsmittel zu mehr für die Bauelemente nutzbaren Raum innerhalb des Gehäuses 1 führen. Durch das Ausbilden der Nase 40 an dem Kontaktbereich 36 des Biegearms 12 kann ebenfalls bei der Positioniergenauigkeit des zweiten Laserstrahls 46 eine höhere Toleranz in Kauf genommen werden, ohne die Güte des Fügeprozesses signifikant zu beeinflussen. Der Biegearm 12 kann auch an einer oder mehreren anderen Stellen stoffschlüssig mit dem Deckel oder auch mit dem Grundteil 2 verbunden sein. Das Schweißen kann auch als so genanntes Maskenschweißen durchgeführt werden, wie es ebenfalls in der BASF-Veröffentlichung offenbart ist.

## Patentansprüche

1. Verfahren zum Herstellen eines Geräts mit einem Gehäuse
(1) und einem Rahmenelement (8), das innerhalb des Gehäuses (1) angeordnet ist, das mindestens ein Bauelement aufnimmt und das mindestens einen Biegearm (12) aufweist, bei dem
- der Biegearm (12) so ausgebildet wird, dass ein Kontaktbereich (36) des Biegearms (12) in einem montierten Zustand innerhalb des Gehäuses (1) an einem Kontaktbereich (38) einer Wandung (34) des Gehäuses (1) mit Vorspannung anliegt, und
- der Biegearm (12) mittels Durchstrahllaserschweißens stoffschlüssig mit dem Gehäuse (1) verbunden wird durch Beaufschlagen des Geräts mit einem Laserstrahl (44, 46) vorgegebener Wellenlänge derart, dass der Laserstrahl (46) durch das Gehäuse (1) hin zu dem Kontaktbereich (36) des Biegearms (12) transmittiert wird, wobei das Gehäuse (1) zumindest in einem Bereich, in den der Laserstrahl (46) transmittiert wird, aus einem Material hergestellt wird, das transparent ist für die vorgegebene Wellenlänge des Laserstrahl (46), und der Kontaktbereich (36) des Biegearms (12) aus einem Material hergestellt wird, das absorbierend ist für die vorgegebene Wellenlänge des Laserstrahls (46).

2. Verfahren nach Anspruch 1, bei dem der Biegearm (12) so elastisch ausgebildet wird, dass er mit einer vorgegebenen Vorspannung in dem montierten Zustand an dem Kontaktbereich (38) des Gehäuses (1) anliegt und andererseits steif genug ist, um Schwingungen zu kompensieren, denen das Rahmenelement (8) ausgesetzt ist.

3. Verfahren nach einem der vorstehenden Ansprüche, bei dem an dem Kontaktbereich (36) des Biegearms (12) eine Nase (40) ausgebildet wird.

4. Verfahren nach einem der vorstehenden Ansprüche, bei dem ein Schirmkörper (42) an dem Biegearm (12) ausgebildet wird, der abgewandt ist von dem Kontaktbereich (38) des Gehäuses (1) in Bezug auf den Kontaktbereich (36) des Biegearms (12) und der in der Flucht des Kontaktbereichs (38) des Gehäuses (1) sich über den Kontaktbereich (36) des Biegearms (12) hinaus erstreckt.

5. Verfahren nach einem der vorstehenden Ansprüche, bei dem das Durchstrahllaserschweißen in Form des SimultanDurchstrahllaserschweißens erfolgt.

6. Gerät mit einem Gehäuse (1) und einem Rahmenelement (8), das innerhalb des Gehäuses (1) angeordnet ist, das mindestens ein Bauelement aufnimmt und das mindestens einen Biegearm aufweist, wobei
- der Biegearm (12) so ausgebildet ist, dass ein Kontaktbereich (36) des Biegearms (12) in einem montierten Zustand innerhalb des Gehäuses (1) an einem Kontaktbereich (38) einer Wandung (34) des Gehäuses (1) mit Vorspannung anliegt und
- der Biegearm (12) mittels Durchstrahllaserschweißens stoffschlüssig mit dem Gehäuse (1) verbunden ist, wobei das Gehäuse (1) zumindest in einem Bereich, durch den zum Durchstrahllaserschweißen ein Laserstrahl vorgegebener Wellenlänge transmittiert wird, aus einem Material hergestellt ist, das transparent ist für die vorgegebene wellenlänge des Laserstrahls (46), und ein Kontaktbereich (36) des Biegearms (12), in dem der Biegearm (12) mit dem Gehäuse (1) verschweißt ist, aus einem Material hergestellt ist, das absorbierend ist für die vorgegebene Wellenlänge des Laserstrahls (46).

## Claims

1. Method for producing a device with a housing (1) and a frame element (8), which is arranged within the housing (1), accommodates at least one component and has at least one bending arm (12), in which
- the bending arm (12) is formed in such a way that, in a mounted state within the housing (1), a contact region (36) of the bending arm (12) bears with prestress against a contact region (38) of a wall (34) of the housing (1), and
- the bending arm (12) is cohesively connected to the housing (1) by means of transmission laser welding by subjecting the device to a laser beam (44, 46) of a prescribed wavelength in such a way that the laser beam (46) is transmitted through the housing (1) to the contact region (36) of the bending arm (12), the housing (1) being produced from a material which is transparent with respect to the prescribed wavelength of the laser beam (46), at least in a region through which the laser beam (46) is transmitted, and the contact region (36) of the bending arm (12) being produced from a material which is absorbent with respect to the prescribed wavelength of the laser beam (46).

2. Method according to Claim 1, in which the bending arm (12) is elastically formed in such a way that, in the mounted state, it bears with a prescribed prestress against the contact region (38) of the housing (1) and, on the other hand, is stiff enough to compensate for vibrations to which the frame element (8) is exposed.

3. Method according to one of the preceding claims, in which a lug (40) is formed on the contact region (36) of the bending arm (12).

4. Method according to one of the preceding claims, in which on the bending arm (12) there is formed a shielding body (42), which is facing away from the contact region (38) of the housing (1) with respect to the contact region (36) of the bending arm (12) and extends in line with the contact region (38) of the housing (1) beyond the contact region (36) of the bending arm (12).

5. Method according to one of the preceding claims, in which the transmission laser welding takes place in the form of simultaneous transmission laser welding.

6. Device with a housing (1) and a frame element (8), which is arranged within the housing (1), accommodates at least one component and has at least one bending arm,
- the bending arm (12) being formed in such a way that, in a mounted state within the housing (1), a contact region (36) of the bending arm (12) bears with prestress against a contact region (38) of a wall (34) of the housing (1) and
- the bending arm (12) is cohesively connected to the housing (1) by means of transmission laser welding, the housing (1) being produced from a material which is transparent with respect to the prescribed wavelength of the laser beam (46), at least in a region through which a laser beam of a prescribed wavelength is transmitted for the transmission laser welding, and a contact region (36) of the bending arm (12) in which the bending arm (12) is welded to the housing (1) being produced from a material which is absorbent with respect to the prescribed wavelength of the laser beam (46).

## Revendications

1. Procédé permettant de produire un appareil qui comporte un boîtier (1) et un cadre (8), lequel cadre est disposé à l'intérieur du boîtier (1), sert de support pour au moins un composant et comporte au moins un bras de flexion (12), où
- le bras de flexion (12) est conçu de manière telle qu'une zone de contact (36) du bras de flexion (12) est appliquée, dans un état installé, par une force de précontrainte à l'intérieur du boîtier (1) contre une zone de contact (38) d'une paroi (34) du boîtier (1) et
- le bras de flexion (12) est lié au boîtier (1) par assemblage à fusion de matière au moyen d'une soudure au laser à pénétration en appliquant à l'appareil un rayon laser (44, 46) de longueur d'onde donnée de telle manière que le rayon laser (46) est transmis à travers le boîtier (1) jusqu'à la zone de contact (36) du bras de flexion (12), le boîtier (1) étant fabriqué, au moins dans une partie à travers laquelle le rayon laser (46) est transmis, à partir d'une matière qui est transparente pour la longueur d'onde donnée du rayon laser (46) et la zone de contact (36) du bras de flexion (12) étant fabriquée à partir d'une matière qui est absorbante pour la longueur d'onde donnée du rayon laser (46).

2. Procédé selon la revendication 1, où le bras de flexion (12) est suffisamment élastique pour s'appliquer, dans l'état installé, avec une force de contrainte donnée sur la zone de contact (38) du boîtier (1) et, d'autre part, suffisamment rigide pour compenser des vibrations auxquelles est soumis le cadre (8).

3. Procédé selon l'une des revendications précédentes, où un ergot (40) est façonné dans la zone de contact (36) du bras de flexion (12).

4. Procédé selon l'une des revendications précédentes, où un corps de protection (42) est façonné sur le bras de flexion (12), ledit corps de protection étant opposé à la zone de contact (38) du boîtier (1) par rapport à la zone de contact (36) du bras de flexion (12) et s'étendant, dans l'alignement de la zone de contact (38) du boîtier (1), sur la zone de contact (36) du bras de flexion (12).

5. Procédé selon l'une des revendications précédentes, où la soudure au laser à pénétration est effectuée sous la forme d'une soudure simultanée au laser à pénétration.

6. Appareil comportant un boîtier (1) et un cadre (8), lequel cadre est disposé à l'intérieur du boîtier (1), sert de support pour au moins un composant et comporte au moins un bras de flexion, où
- le bras de flexion (12) est conçu de manière telle qu'une zone de contact (36) du bras de flexion (12) est appliquée, dans un état installé, par une force de précontrainte à l'intérieur du boîtier (1) contre une zone de contact (38) d'une paroi (34) du boîtier (1) et
- le bras de flexion (12) est lié au boîtier (1) par assemblage à fusion de matière au moyen d'une soudure au laser à pénétration, le boîtier (1) étant fabriqué, au moins dans une partie à travers laquelle est transmis un rayon laser d'une longueur d'onde donnée pour la soudure au laser à pénétration, à partir d'une matière qui est transparente pour la longueur d'onde donnée du rayon laser (46) et la zone de contact (36) du bras de flexion (12), dans laquelle le bras de flexion (12) est soudé au boîtier (1), étant fabriquée à partir d'une matière qui est absorbante pour la longueur d'onde donnée du rayon laser (46).
